# EUROPÄISCHE PATENTSCHRIFT

(11) **EP 1 185 787 B1**
(45) Veröffentlichungstag und Bekanntmachung des Hinweises auf die Patenterteilung: **27.04.2005**
(21) Anmeldenummer: 00988644.1
(22) Anmeldetag: 24.11.2000
(51) Int. Cl.: F02M 51/00

(54) **VENTIL ZUM STEUERN VON FLÜSSIGKEITEN**
VALVE FOR CONTROLLING LIQUIDS
SOUPAPE DE REGULATION DE LIQUIDES

(30) Priorität: 20.01.2000 DE 10002270
(43) Veröffentlichungstag der Anmeldung: 13.03.2002
(73) Patentinhaber: ROBERT BOSCH GMBH, 70442 Stuttgart (DE)
(72) Erfinder: RUEGER, Johannes-Jörg, 71665 Vaihingen/Enz (DE); MATTES, Patrick, 70569 Stuttgart (DE); STOECKLEIN, Wolfgang, 70197 Stuttgart (DE); SCHULZ, Udo, 71665 Vaihingen/Enz (DE)
(86) Internationale Anmeldenummer: PCT/DE2000/004172
(87) Internationale Veröffentlichungsnummer: WO 2001/053693

(56) Entgegenhaltungen:
- DE-A- 19 732 802
- DE-A- 19 743 668
- DE-A- 19 813 983
- US-A- 5 875 764

## Beschreibung

### Stand der Technik

Die Erfindung geht von einem Ventil zum Steuern von Flüssigkeiten nach der im Obergriff des Patentanspuches 1 näher definierten Art aus.

Ein derartiges Ventil ist in der DE 197 328 02 für eine Kraftstoffeinspritzvorrichtung einer Brennkraftmaschine mit einem Hochdrucksystem (Common-Rail-System) beschrieben. Diese Kraftstoffeinspritzvorrichtung besitzt zwei Ventilsitze, die mit Dichtflächen eines Ventilschließglieds bei Betätigung durch einen Piezoantrieb in einer Bewegungsabfolge zusammenwirken, wobei sich das Ventilschließglied anfänglich in Schließstellung an dem ersten Ventilsitz befindet, dann in eine Zwischenstellung zwischen die Ventilsitze gebracht wird, um anschließend wieder in eine Schließstellung an den zweiten Ventilsitz zu gelangen. Hierzu wird ein piezoelektrischer Aktor auf eine raildruckabhängige Spannung geladen, welche eine Längung des Aktors und eine daraus resultierende Bewegung des Ventilschließgliedes zu dem zweiten Ventilsitz zur Folge hat. Zur Umkehrbewegung des Ventilschließgliedes in Richtung des ersten Ventilsitzes wird der Aktor wieder entladen.

Durch den Bewegungsablauf des Ventilschließglieds vom einen zum anderen Ventilsitz wird eine kurzzeitige Entlastung eines unter Hochdruck stehenden Ventilsteuerraumes erreicht, über dessen Druckniveau eine Öffnungs- bzw. Schließstellung einer Ventilnadel in der kraftausgeglichen ausgebildeten Kraftstoffeinspritzvorrichtung bestimmt und somit die Kraftstoffeinspritzung gesteuert wird. Die Kraftstoffeinspritzung wird dabei ermöglicht, während sich das Ventilschließglied in einer Zwischenstellung zwischen den beiden Ventilsitzen befindet. Auf diese Weise kann auch eine zweifache Kraftstoffeinspritzung, z.B. eine Voreinspritzung und eine Haupteinspritzung, mittels einer einzigen Erregung des Piezoantriebes realisiert werden.

Da die Ansteuerung des Ventilgliedes nicht direkt, sondern mittels einer hydraulischen Übersetzung erfolgt, ist der Druckaufbau in der als hydraulischer Koppler fungierenden Hydraulikkammer entscheidend für die Hublänge des Ventilgliedes. Wenn der piezoelektrische Aktor so stark mit Spannung beaufschlagt wird, daß sich das Ventilschließglied aus seinem Ventilsitz bewegt, wird ein Teil der in der Hydraulikkammer befindlichen Kraftstoffmenge über deren Leckspalte herausgedrückt. Dieser Effekt ist besonders groß, wenn das Steuerventil an dem zweiten, dem Hochdruckbereich zugewandten Ventilsitz gehalten wird, da in diesem Fall die Gegenkraft durch den Raildruck besonders groß ist. Die Wiederbefüllung des Niederdruckbereiches bzw. des hydraulischen Kopplers erfolgt durch einen Systemdruck, welcher beispielsweise in der Praxis 15 bar betragen kann, ebenfalls über diese Leckspalte, allerdings nur in der Zeit, während der der piezoelektrische Aktor nicht angesteuert ist.

Gleiches trifft für ähnliche aus der Praxis bekannte Ventile zu, welche mit nur einem Ventilsitz ausgestattet sind, wobei das Ventilschließglied aus diesem Ventilsitz herausgehoben und wieder zurückbewegt wird.

Bei all diesen Ventilen besteht bei kurz aufeinanderfolgenden Einspritzungen das Problem, daß der hydraulische Koppler in der Regel nicht vollständig wiederbefüllt ist. Daher ist der Ventilhub, der sich bei gleicher Ansteuerspannung des piezoelektrischen Aktors und damit gleichem Aktorhub bei diesen Einspritzungen einstellt, unterschiedlich. Je dichter zwei Einspritzungen aufeinanderfolgen, d.h. je kürzer die Wiederbefüllungszeit zwischen den Einspritzungen ist, und je länger der Aktor zuvor angesteuert war, d.h. je größer die Belastungszeit des hydraulischen Kopplers und damit die Leckagemenge ist, desto größer ist der beschriebene nachteilige Effekt. Der unterschiedliche Aktorhub führt wiederum in nachteiliger Weise zu Ungenauigkeiten bei der Dosierung der Einspritzmenge, wobei der Aktorhub unter Umständen so gering sein kann, daß dies ohne Auswirkungen auf die Ventilnadel bleibt und z.B. bei einer Verwendung als Kraftstoffeinspritzventil keine Kraftstoffeinspritzung stattfindet.

### Vorteile der Erfindung

Das erfindungsgemäße Ventil zur Steuerung von Flüssigkeiten mit den Merkmalen des Patentanspruchs 1 hat den Vorteil, daß der sich einstellende Ventilhub mittels entsprechend modifizierter Ansteuerspannung der piezoelektrischen Einheit für alle Einspritzungen identisch ausführbar ist. Damit gelingt es, auch bei einem hohen anstehenden Druckniveau im Hochdruckbereich kurz aufeinanderfolgende Einspritzungen, wie sie bei einer Voreinspritzung, Haupteinspritzung und Nacheinspritzung zur Verbesserung der Verbrauchs- und Abgaswerte erforderlich sein können, mit reproduzierbarer Hublänge für alle Einspritzungen durchzuführen, da das unterschiedliche Füllniveau des Niederdruckbereiches bzw. des hydraulischen Kopplers, den die Hydraulikkammer darstellt, über die Ansteuerspannung kompensierbar ist.

Mit dem erfindungsgemäßer Ventil, bei dem zusätzlich zur Berücksichtigung des Druckniveaus im Hochdruckbereich eine Modifikation der Ansteuerspannung in Abhängigkeit von Leckageverlusten und Wiederbefüllung vorgenommen wird, kann vorteilhafterweise eine stabile Einspritzung garantiert werden.

In einer besonders vorteilhaften Ausführung der Erfindung kann vorgesehen sein, daß zur Ermittlung des Leckageverlustes aus dem Niederdruckbereich eine Ansteuerdauer einer vorangegangenen Einspritzung an die elektrische Ansteuereinheit ausgegeben wird. Die Ansteuerdauer der vorangegangenen Einspritzung stellt eine zuverlässige Größe für die Menge an Hydraulikflüssigkeit dar, welche während der Belastungszeit des hydraulischen Kopplers über Leckagestellen ausgepreßt wurde.

Als ein sehr zuverlässiger Wert für die Wiederbefüllung des Niederdruckbereiches kann in einer weiteren vorteilhaften Ausführung des erfindungsgemäßen Ventils vorgesehen sein, daß ein zeitlicher Abstand zwischen einem Ende der vorangegangenen Einspritzung und dem Beginn der nachfolgenden Einspritzung an die elektrische Steuereinheit ausgegeben wird, da dieser zeitliche Abstand in der Regel der Wiederbefüllzeit entspricht. Aus Wiederbefüllzeit und Belastungszeit läßt sich damit der Befüllungsgrad des Kopplers vor der nachfolgenden Einspritzung bestimmen.

Weitere Vorteile und vorteilhafte Ausgestaltungen des Gegenstandes der Erfindung sind der Beschreibung, der Zeichnung und den Patentansprüchen entnehmbar.

### Zeichnung

Ein Ausführungsbeispiel des erfindungsgemäßen Ventils zur Steuerung von Flüssigkeiten ist in der Zeichnung dargestellt und wird in der folgenden Beschreibung näher erläutert. Es zeigen
Figur 1 eine schematische, ausschnittsweise Darstellung eines Ausführungsbeispiels der Erfindung bei einem Kraftstoffeinspritzventil für Brennkraftmaschinen im Längsschnitt; und
Figur 2 ein Signalfluß-Blockbild mit einem Kennfeld einer elektrischen Steuereinheit zur Korrektur der Ansteuerspannung einer piezoelektrischen Einheit des Kraftstoffeinspritzventils nach Figur 1.

### Beschreibung des Ausführungsbeispiels

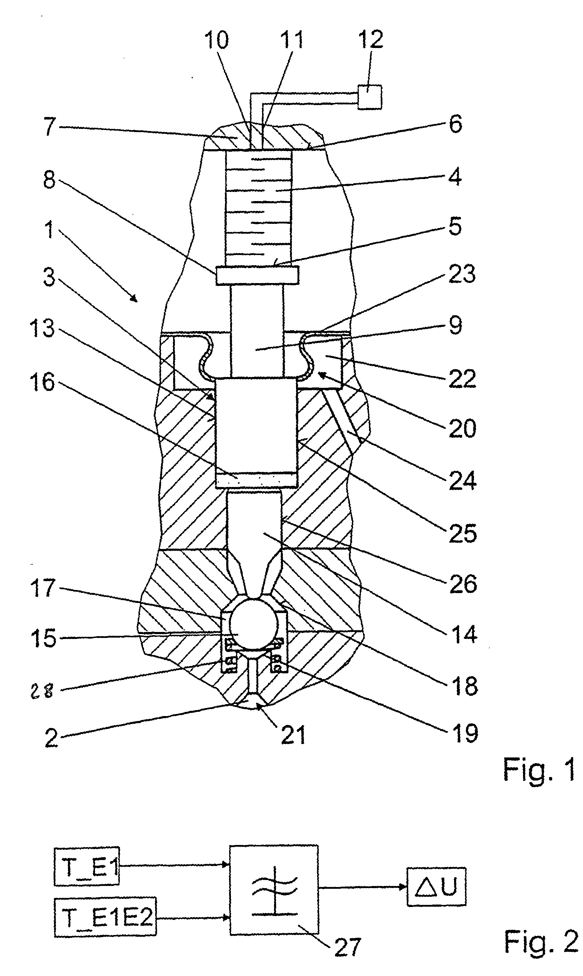

Das in Figur 1 dargestellte Ausführungsbeispiel zeigt eine Verwendung des erfindungsgemäßen Ventils bei einem Kraftstoffeinspritzventil 1 für Brennkraftmaschinen von Kraftfahrzeugen. Das Kraftstoffeinspritzventil 1 ist vorliegend als ein Common-Rail-Injektor ausgebildet, wobei die Kraftstoffeinspritzung über das Druckniveau in einem Ventilsteuerraum 2, welcher mit einer Hochdruckversorgung verbunden ist, gesteuert wird.

Zur Einstellung eines Einspritzbeginns, einer Einspritzdauer und einer Einspritzmenge über Kräfteverhältnisse in dem Kraftstoffeinspritzventil 1 wird ein Ventilglied 3 über eine mit einem piezoelektrischen Aktor 4 ausgebildete piezoelektrische Einheit angesteuert, welche auf der ventilsteuerraum- und brennraumabgewandten Seite des Ventilgliedes 3 angeordnet ist.

Der piezoelektrische Aktor 4 ist in bekannter Weise aus mehreren Schichten aufgebaut und weist auf seiner dem Ventilglied 3 zugewandten Seite einen Aktorkopf 5 sowie auf seiner dem Ventilglied 3 abgewandten Seite einen Aktorfuß 6 auf, der sich an einem Ventilkörper 7 abstützt. An dem Aktorkopf 5 liegt über ein Auflager 8 ein Stellkolben 9 des Ventilgliedes 3 an, welcher in seinem Durchmesser gestuft ausgeführt ist.

Zur Beaufschlagung des piezoelektrischen Aktors 4 mit elektrischer Spannung sind an dem Aktorfuß 6 Kontakte 10, 11 vorgesehen, die mit einer in der Figur 1 nur symbolisch angedeuteten elektrischen Steuereinheit 12 verbunden sind, welche den piezoelektrischen Aktor 4 ansteuert.
Das über den piezoelektrischen Aktor 4 betätigbare Ventilglied 3 ist axial verschiebbar in einer als Längsbohrung ausgeführten Bohrung 13 angeordnet und mehrteilig ausgeführt, wobei es neben dem Stellkolben 9 noch einen Betätigungskolben 14 aufweist, der zur Betätigung eines kugelförmigen Ventilschließgliedes 15 vorgesehen ist. Der Stellkolben 9 und der Betätigungskolben 14 sind mittels einer hydraulischen Übersetzung miteinander gekoppelt.

Die hydraulische Übersetzung, mittels der die Auslenkung des piezoelektrischen Aktors 4 bis auf das Ventilschließglied 15 übertragen wird, stellt eine Hydraulikkammer 16 dar. Die Hydraulikkammer 16 schließt zwischen den beiden sie begrenzenden Kolben 9 und 14, von denen der Betätigungskolben 14 mit einem kleineren Durchmesser als der Stellkolben 9 ausgebildet ist, ein gemeinsames Ausgleichsvolumen ein. Dabei ist die Hydraulikkammer 16 zwischen dem Stellkolben 9 und dem Betätigungskolben 14 in einer Weise eingespannt, daß der Betätigungskolben 14 einen um das Übersetzungsverhältnis des Kolbendurchmessers vergrößerten Hub macht, wenn der größere Stellkolben 9 durch den piezoelektrischen Aktor 4 um eine bestimmte Wegstrecke bewegt wird. Dabei liegen der piezoelektrische Aktor 4, der Stellkolben 9 und der Betätigungskolben 14 hintereinander auf einer gemeinsamen Achse.

Neben der hydraulischen Kraftübertragung dient die Hydraulikkammer 16 auch als Toleranzausgleichselement für Längungstoleranzen in den Bauteilen des Kraftstoffeinspritzventils 1 aufgrund von Temperaturgradienten oder unterschiedlichen Temperaturausdehnungskoeffizienten der verwendeten Materialien sowie für eventuelle Setzeffekte. Die Kolben 9 und 14 können dabei in das Volumen der Hydraulikkammer 13 eintauchen und sich daraus zurückziehen ohne dadurch eine Änderung der Position des anzusteuernden Ventilschließgliedes 15 zu bewirken.

Das Ventilschließglied 15 wirkt an dem ventilraumseitigen Ende des Ventilgliedes 3 bzw. Betätigungskolbens 14 in einem Ventilraum 17 mit zwei an dem Ventilkörper 7 ausgebildeten Ventilsitzen 18, 19 zusammen. Der erste bzw. obere Ventilsitz 18 begrenzt dabei einen Niederdruckbereich 20, während der zweite bzw. untere Ventilsitz 19 zu dem Ventilsteuerraum 2 führt, welcher einem Hochdruckbereich 21 zugeordnet ist. Dem zweiten Ventilsitz 19 ist eine Feder 28 zugeordnet, die das Ventilschließglied 15 bei Entlastung des Ventilsteuerraums am ersten Ventilsitz 18 hält.

In dem Ventilsteuerraum 2 des Hochdruckbereiches 21 ist ein bewegbarer Ventilsteuerkolben angeordnet, der in der Zeichnung nicht weiter dargestellt ist. Durch axiale Bewegungen des Ventilsteuerkolbens in dem ventil steuerraum 2 wird eine Einspritzdüse des Kraftstoffeinspritzventils 1 auf an sich bekannte Weise gesteuert. In den Ventilsteuerraum 2 mündet üblicherweise auch eine Einspritzleitung, welche die Einspritzdüse mit Kraftstoff versorgt. Die Einspritzleitung ist mit einem für mehrere Kraftstoffeinspritzventile gemeinsamen Hochdruckspeicherraum (Common-Rail) verbunden. Der Hochdruckspeicherraum wird dabei in bekannter Weise von einer Kraftstoffhochdruckförderpumpe mit Kraftstoff hohen Druckes aus einem Vorratstank gespeist.

An das piezcseitige Ende der Bohrung 13 schließt sich ein Ventilsystemdruckraum 22 an. Dieser ist einerseits durch den Ventilkörper 7 und andererseits durch ein mit dem Stellkolben 9 des Ventilgliedes 3 und dem Ventilkörper 7 verbundenes Dichtelement 23 begrenzt, welches vorliegend als faltenbalgartige Membran ausgebildet ist und verhindert, daß der piezoelektrische Aktor 4 mit dem in dem Ventilsystemdruckraum 22 enthaltenen Kraftstoff in Kontakt kommt.

Da die Hydraulikkammer 16 während einer Ansteuer- bzw. Bestromungspause des piezoelektrischen Aktors 4 wieder befüllt werden muß, ist ein Ausgleich einer Leckagemenge des Niederdruckbereiches 20 durch Entnahme von Hydraulikflüssigkeit des Hochdruckbereiches 21 vorgesehen. Hierzu dient eine Befülleinrichtung 24, welche in den Ventilsystemdruckraum 22 mündet, welcher über einen den Stellkolben 9 umgebenden Spalt 25 mit der Hydraulikkammer 16 in Verbindung steht, so daß über den Spalt 25 auch eine Befüllung der Hydraulikkammer 16 möglich ist.

Selbstverständlich kann in einer hiervon abweichenden Ausführung vorgesehen sein, daß die Befülleinrichtung 24 in einen anderen Systemdruckraum oder direkt in den Spalt 25 oder in einen den Betätigungskolben 14 umgebenden Spalt 26 mündet.

Das Kraftstoffeinspritzventil 1 nach Figur 1 arbeitet dabei in nachfolgend beschriebener Weise.

In geschlossenem Zustand des Kraftstoffeinspritzventils 1 und ungeladenem piezoelektrischen Aktor 4 wird das Ventilschließglied 15 des Ventilglieds 3 in Anlage an dem ihm zugeordneten oberen Ventilsitz 18 gehalten, so daß kein Kraftstoff aus dem mit dem Hochdruckspeicherraum verbundenen Ventilsteuerraum 2 in den Niederdruckbereich 20 gelangen kann.

Im Falle einer langsamen Betätigung, wie sie bei einer temperaturbedingten Längenänderung des piezoelektrischen Aktors 4 oder weiterer Ventilbauteile wie z.B. des Ventilkörpers 7 auftritt, dringt der Stellkolben 9 mit Temperaturerhöhung in das Ausgleichsvolumen der Hydraulikkammer 16 ein oder zieht sich bei Temperaturabsenkung daraus zurück, ohne daß dies Auswirkungen auf die Schließ- und Öffnungsstellung des Ventilgliedes 3 und des Kraftstoffventils 1 insgesamt hat.

Wenn eine Einspritzung des Kraftstoffeinspritzventils 1 erfolgen soll, wird der piezoelektrische Aktor 4 bestromt, wodurch dieser seine axiale Ausdehnung schlagartig vergrößert. Über den Stellkolben 9 und die Hydraulikkammer 16 wird diese Längung des piezoelektrischen Aktors 4 auf den Betätigungskolben 14 übertragen, wodurch das Ventilschließglied 15 aus dem ersten, oberen Ventilsitz 18 herausgehoben wird und gegen den anliegenden Raildruck entgegen dem zweiten, unteren Ventilsitz 19 bewegt wird.

Bei einer Einstellung der dazu auf dem piezoelektrischen Aktor 4 aufgebrachten Spannung wird von der elektrischen Steuereinheit 12 nicht nur das Druckniveau im Hochdruckbereich 21, d.h. der Raildruck, sondern auch der Leckageverlust des Niederdruckbereiches 20 aus der Hydraulikkammer 15 während einer vorangegangenen Einspritzung E1 und die Wiederbefüllung berücksichtigt.

Wie Figur 2 zeigt, weist die elektrische Steuereinheit 12 hierzu ein Kennfeld 27 auf, wobei als Eingangsdaten eine Ansteuerdauer T_E1 der vorangegangenen Einspritzung E1 und ein zeitlicher Abstand T_E1E2 zwischen dem Ende der vorangegangenen Einspritzung E1 und dem Beginn der nachfolgenden Einspritzung E2 eingehen. Die Ansteuerdauer T_E1 der vorangegangenen Einspritzung E1 und der zeitliche Abstand T_E1E2 geben dabei den Leckageverlust aus dem Niederdruckbereich 20 bzw. die Wiederbefüllzeit seit der vorangegangenen Einspritzung E1 an. In Abhängigkeit dieser Eingangsdaten wird ein Korrekturwert der Ansteuerspannung ΔU ausgegeben, welcher zu dem Grundwert der Ansteuerspannung, der sich hauptsächlich aus dem Raildruck bemißt, aufaddiert wird. Dabei ist der Korrekturwert ΔU der Ansteuerspannung so bemessen, daß sich die Ansteuerspannung bei aufeinanderfolgenden Einspritzungen erhöht, um eine Differenz zwischen dem Leckageverlust und der Wiederbefüllung des Niederdruckbereiches 20 zu kompensieren. Auf diese Weise wird eine reproduzierbare Hublänge des Ventilgliedes 3 bzw. Betätigungskolbens 14 erreicht und sichergestellt, daß einerseits eine korrekte Einspritzung erfolgt und andererseits das Ventilschließglied 15 stets zur Anlage an dem zweiten Ventilsitz 19 gelangt.

Die Ansteuerung der piezoelektrischen Einheit wird noch genauer, wenn die elektrische Steuereinheit 12 die Ansteuerspannung zusätzlich bezüglich der aktuellen Temperatur des piezoelektrischen Aktors 4 korrigiert.

Selbstverständlich kann dabei auch vorgesehen sein, daß das Ventilschließglied 15 in seiner Mittelstellung stabilisiert wird. Es kann auch vorgesehen sein, daß das Ventil 1 nicht als doppelschaltendes Ventil arbeitet, sondern daß das Ventilschließglied nur mit dem ersten Ventilsitz 18 zusammenwirkt. Auch eine Ansteuerung, bei der das Ventilschließglied mit hoher Geschwindigkeit und hoher Spannung in den zweiten Ventilsitz 19 gefahren wird, so daß die Einspritzung bei der Rückbewegung vom zweiten Ventilsitz 19 in den ersten Ventilsitz 18 stattfindet, ist bei dem erfindungsgemäßen Ventil denkbar.

Selbstverständlich ist abweichend von der gezeigten doppelsitzigen Ventilausführung auch eine Ausführung des Kraftstoffeinspritzventiles mit nur einem Sitz möglich.

## Patentansprüche

1. Ventil zum Steuern von Flüssigkeiten, mit einer piezoelektrischen Einheit (4) zur Betätigung eines in einer Bohrung (13) eines Ventilkörpers (7) axial verschiebbaren Ventilglieds (3), welches mit wenigstens einem an die piezoelektrische Einheit (4) grenzenden Stellkolben (9) und wenigstens einem an ein Ventilschließglied (15) grenzenden Betätigungskolben (14) ausgebildet ist, zwischen denen eine als hydraulische Übersetzung arbeitende Hydraulikkammer (16) angeordnet ist, wobei das Ventilschließglied (15) mit wenigstens einem Ventilsitz (18, 19) zum Öffnen und Schließen des Ventils (1) zusammenwirkt und einen Niederdruckbereich (20) von einem Hochdruckbereich (21) trennt, und wobei das Druckniveau im Hochdruckbereich (21) ein Parameter zur Einstellung einer Ansteuerspannung für die piezoelektrische Einheit (4) darstellt, **dadurch gekennzeichnet, daß** eine elektrische Steuereinheit (12) die Ansteuerspannung für die piezoelektrische Einheit (4) in Abhängigkeit eines Leckageverlustes des Niederdruckbereichs (20), insbesondere der Hydraulikkammer (15), und dessen Wiederbefüllung vorgibt.

2. Ventil nach Anspruch 1 **dadurch gekennzeichnet, daß** es Bestandteil eines Kraftstoffeinspritzventils für Brennkraftmaschinen, insbesondere eines Common-Rail-Injektors (1) ist.

3. Ventil nach Anspruch 2, **dadurch gekennzeichnet, daß** zur Ermittlung des Leckageverlustes aus dem Niederdruckbereich (20) eine Ansteuerdauer (T_E1) einer vorangegangenen Einspritzung (E1) an die elektrische Steuereinheit (12) ausgegeben wird.

4. Ventil nach Anspruch 2, **dadurch gekennzeichnet, daß** zur Ermittlung der Wiederbefüllung des Niederdruckbereiches (20) ein zeitlicher Abstand (T_E1E2) zwischen einem Ende der vorangegangenen Einspritzung (E1) und dem Beginn der nachfolgenden Einspritzung (E2) an die elektrische Steuereinheit (12) ausgegeben wird.

5. Ventil nach Anspruch 3 oder 4, **dadurch gekennzeichnet, daß** die elektrische Steuereinheit (12) ein Kennfeld (27) aufweist, mittels dem ein Korrekzurwert (ΔU) für die Ansteuerspannung in Abhängigkeit der Ansteuerdauer (T E1) der vorangegangenen Einspritzung (E1) und/oder des zeitlichen Abstandes (T_E1E2) zu der vorangegangenen Einspritzung (E1) ausgegeben wird.

6. Ventil nach einem der Ansprüche 1 bis 5, **dadurch gekennzeichnet, daß** eine Temperatur der piezoelektrischen Einheit (4) einen Parameter zur Einstellung der Ansteuerspannung darstellt.

7. Ventil nach einem der Ansprüche 2 bis 6, **dadurch gekennzeichnet, daß** die Ansteuerspannung bei aufeinanderfolgenden Einspritzungen derart erhöht wird, daß eine Differenz zwischen dem Leckageverlust und der Wiederbefüllung des Niederdruckbereiches (20) kompensiert wird und der Hub des Ventilschließgliedes (15) konstant ist.

8. Ventil nach einem der Ansprüche 1 bis 7, **dadurch gekennzeichnet, daß** zur Wiederbefüllung des Niederdruckbereiches (20) eine mit dem Hochdruckbereich (21) verbindbare Befülleinrichtung (24) vorgesehen ist, welche einen Systemdruckraum (22) aufweist, der in einen den Betätigungskolben (14) umgebenden Spalt (26) oder in einen den Stellkolben (9) umgebenden Spalt (25) mündet.

## Claims

1. Valve for controlling liquids, with a piezoelectric unit (4) for actuating a valve member (3) which is axially displaceable in a bore (13) of a valve body (7) and is formed with at least one control piston (9), adjacent to the piezoelectric unit (4), and at least one actuating piston (14), adjacent to a valve closing member (15), between which pistons a hydraulic chamber (16) acting as a hydraulic booster is arranged, the valve closing member (15) interacting with at least one valve seat (18, 19) for opening and closing the valve (1) and separating a low-pressure region (20) from a high-pressure region (21), and the pressure level in the high-pressure region (21) representing a parameter for setting a trigger voltage for the piezoelectric unit (4), **characterized in that** an electrical control unit (12) specifies the trigger voltage for the piezoelectric unit (4) in dependence on a leakage loss of the low-pressure region (20), in particular from the hydraulic chamber (16), and the refilling of the said low-pressure region.

2. Valve according to Claim 1, **characterized in that** it is a component part of a fuel injection valve for internal combustion engines, in particular a common-rail injector (1).

3. Valve according to Claim 2, **characterized in that**, to ascertain the leakage loss from the low-pressure region (20), a triggering duration (T_E1) of a preceding injection (E1) is output to the electrical control unit (12).

4. Valve according to Claim 2, **characterized in that**, to ascertain the refilling of the low-pressure region (20), a time interval (T_E1E2) between an end of the preceding injection (E1) and the beginning of the next injection (E2) is output to the electrical control unit (12).

5. Valve according to Claim 3 or 4, **characterized in that** the electrical control unit (12) has a performance map (27), by means of which a correction value (ΔU) for the trigger voltage is output in dependence on the triggering duration (T_E1) of the preceding injection (E1) and/or the time interval (T_E1E2) since the preceding injection (E1).

6. Valve according to one of Claims 1 to 5, **characterized in that** a temperature of the piezoelectric unit (4) represents a parameter for setting the trigger voltage.

7. Valve according to one of Claims 2 to 6, **characterized in that** the trigger voltage in successive injections is increased in such a way that a difference between the leakage loss and the refilling of the low-pressure region (20) is compensated, and the stroke of the valve closing member (15) is constant.

8. Valve according to one of Claims 1 to 7, **characterized in that** a filling device (24) which can be connected to the high-pressure region (21) and has a system pressure chamber (22) which opens out into a gap (26) surrounding the actuating piston (14) or into a gap (25) surrounding the control piston (9) is provided for refilling the low-pressure region (20).

## Revendications

1. Soupape de commande de liquides comprenant une unité piézo-électrique (4) pour actionner un organe de soupape (3), coulissant axialement dans un perçage (13) d'un corps de soupape (7), cet organe de soupape ayant au moins un piston de réglage (9) adjacent à l'unité piézo-électrique (4) et au moins un piston d'actionnement (14) adjacent à l'organe d'obturation de soupape (15) et entre lesquels il y a une chambre hydraulique (16) fonctionnant comme démultiplicateur hydraulique, l'organe d'obturation de soupape (15) coopérant avec au moins un siège de soupape (18, 19) pour ouvrir et fermer la soupape (1) et séparer une zone basse pression (20) d'une zone haute pression (21), dont le niveau de pression dans la zone haute pression (21) constitue un paramètre pour régler une tension de commande de l'unité piézo-électrique (4),
**caractérisée en ce qu'**
une unité de commande électrique (12) prédéfinit la tension de commande de l'unité piézo-électrique (4) en fonction de la perte par fuite de la zone basse pression (20), notamment de la chambre hydraulique (16), et assure son remplissage.

2. Soupape selon la revendication 1,
**caractérisée en ce qu'**
elle fait partie d'un injecteur de carburant de moteur à combustion interne, notamment d'un injecteur d'un système à rampe commune (1).

3. Soupape selon la revendication 2,
**caractérisée en ce que**
pour déterminer les pertes par fuite de la zone basse pression (20), une durée de commande (T-E1) pour une injection antérieure (E1) est fournie à l'unité de commande électrique (12).

4. Soupape selon la revendication 2,
**caractérisée en ce que**
pour déterminer le remplissage de la zone basse pression (20), on émet un intervalle de temps (T-E1E2) entre la fin de l'injection précédente (E1) et le début de l'injection suivante (E2) à l'unité de commande électrique (12).

5. Soupape selon la revendication 3 ou 4,
**caractérisée en ce que**
l'unité de commande électrique (12) comporte un champ de caractéristiques (27) qui fournit une valeur de correction (ΔU) de la tension de commande en fonction de la durée de commande (T-E1) de l'injection précédente (E1) et/ou l'intervalle de temps (T-E1E2) par rapport à l'injection précédente (E1).

6. Soupape selon l'une des revendications 1 à 5,
**caractérisée en ce qu'**
une température de l'unité piézo-électrique (4) constitue un paramètre pour régler la tension de commande.

7. Soupape selon l'une des revendications 2 à 6,
**caractérisée en ce qu'**
on augmente la tension de commande pour des injections successives de façon à compenser la différence entre la perte de fuite et le remplissage de la zone basse pression (20) et à maintenir constante la course de l'organe d'obturation de soupape (15).

8. Soupape selon l'une des revendications 1 à 7,
**caractérisée en ce qu'**
une installation de remplissage (24) reliée à la zone haute pression (21) est prévue pour remplir de nouveau la zone basse pression (20), comporte une chambre de pression systématique (22) dans laquelle débouche un intervalle (26) entourant le piston d'actionnement (16) ou un intervalle (25) entourant le piston de réglage (9).
